# EUROPEAN PATENT APPLICATION

(11) **EP 2 163 970 A2**
(43) Date of publication of application: **17.03.2010**
(21) Application number: 09013496.6
(22) Date of filing: 05.02.2008
(51) Int. Cl.: G06F 3/044, G06F 3/045, G06F 3/048, G06F 1/16, G06F 3/01, G06F 3/041

(54) **Adaptable user interface and mechanism for a portable electronic device**

(30) Priority: 27.02.2007 US 679228
(62) Divisional of application: 08728978.1
(71) Applicant: Motorola, Inc., Schaumburg, IL 60196 (US)
(72) Inventor: Cybart, Adam K, Mchenry, Illinois 60051 (US); Baciu, Paul N., Illinois 60060 (US); Cranfill, David B., Illinois 6002 (US); Daverman, R. Dodge D., Illinois 60622 (US); Emmert, Steve C., Illinois 60014 (US); Foo, Ken K., Illinois 60031 (US); Zhuang, Zhimming, Kildeer, Illinois 60047 (US)
(74) Representative: Openshaw, Paul Malcolm

(57) **Abstract**

A multimodal electronic device (100) includes a shutter enabled dynamic keypad for presenting one of a plurality of keypad configurations to a user. Each keypad configuration is presented by an optical shutter (204) that opens or closes windows or shutters that are geometrically configured as alphanumeric or device keys or symbols. Each keypad configuration, in one embodiment, is limited to those needed for the particular mode of operation of the device (100). The optical shutter (204) is a low-resolution display that presents user actuation targets to a user in a low-resolution key area. As each mode of the device changes, the corresponding keypad configuration presented changes accordingly.

## Description

### BACKGROUND

### TECHNICAL FIELD

This invention relates generally to electronic devices having user interfaces, and more particularly to an electronic device having a user interface, such as a keypad, that may be configured to present a variety of device-mode-based keypad configurations to a user.

### BACKGROUND ART

Portable electronic devices, such as radiotelephones, are becoming more and more popular. According to some estimates, over two billion mobile telephones are in use across the world today. As more people come to use mobile devices, designers and engineers are creating devices that integrate more and more features. For instance, many mobile telephones today also include digital camera functions and text messaging functions. Some even include music playback functions.

One issue associated with the integration of new features and functionality with devices like mobile telephones involves the user interface. Traditional mobile telephones only included twelve to fifteen keys. These keys included the standard 12-digit telephone keypad, along with a "send" key and an "end" key. Such devices are sometimes not compatible with new features and functions as new modes of operation require new, dedicated keys or input devices in addition to the basic phone keys. Further, the devices may also require additional keys for the purpose of navigation or initiation of the modes within the device.

One solution to the need for more keys in the user interface is to simply add more buttons to the device. Some devices, for example, include full keypads with forty to fifty keys. The problem with this solution is that many mobile devices, including mobile telephones, are getting smaller and thinner. When many keys are clustered in one location, the likelihood of user confusion or difficulty with operation of the device increases. What's more, in a particular mode, many of the keys are not needed. For example, when a device is in a camera mode, the number keys 1-9 are generally not needed to take pictures.

A further problem associated with user interfaces involves visibility. It is desirable to be able to see user interfaces in both low-light and bright-light environments. When device user interfaces are crowded with many keys, each key is generally configured to be as small as possible while still permitting acceptable usage characteristics. The typical way to illuminate a user interface is with a backlight, where a light behind the keys projects through the keys. As the keys get smaller and are placed more closely together, the surface area of each key through which light may pass becomes smaller. This results in less visible user interface in low-light conditions.

Thus there is a need for an improved user interface for electronic devices that provides a plurality of user interfaces, where each interface includes keys required for a particular mode of operation, and which exhibits good visibility in both low-light and bright-light conditions.

### BRIEF DESCRIPTION OF THE DRAWINGS

FIG. 1 illustrates an electronic device having a shutter enabled dynamic keypad in accordance with one embodiment of the invention.

FIG. 2 illustrates an exploded view of one embodiment of a dynamic keypad interface in accordance with the invention.

FIG. 3 illustrates a sectional view of one embodiment of a dynamic keypad interface in accordance with the invention.

FIG. 4 illustrates one embodiment of a capacitive sensor in accordance with the invention.

FIG. 5 illustrates one embodiment of a proximity sensor in accordance with the invention.

FIG. 6 illustrates an exploded view of a twisted nematic liquid crystal display in accordance with one embodiment of the invention.

FIG. 7 illustrates an optical shutter in the opaque state in accordance with one embodiment of the invention.

FIG. 8 illustrates an exemplary segmented optical shutter having sample shutters open, or in the translucent state, in accordance with the invention.

FIG. 9 illustrates a segmented electroluminescent device in accordance with one embodiment of the invention.

FIG. 10 illustrates one embodiment of a resistive switch layer in accordance with the invention.

FIG. 11 illustrates one embodiment of a substrate layer in accordance with the invention.

FIG. 12 illustrates one embodiment of a tactile feedback layer in accordance with the invention.

FIG. 13 illustrates an exploded view of one embodiment of a dynamic keypad interface in accordance with the invention.

FIG. 14 illustrates a perspective view of an assembled dynamic keypad interface in accordance with one embodiment of the invention.

FIG. 15 illustrates a perspective view of an assembled dynamic keypad interface being inserted into an electronic device in accordance with one embodiment of the invention.

FIG. 16 illustrates a resistive switch sensing area in accordance with one embodiment of the invention.

FIG. 17 illustrates a capacitive switch sensing area in accordance with one embodiment of the invention.

FIG. 18 illustrates an exemplary multimodal device having multiple shutters open in accordance with one embodiment of the invention.

FIG. 19 illustrates an exemplary multimodal device in an OFF or low-power state in accordance with one embodiment of the invention.

FIG. 20 illustrates an exemplary multimodal device in a navigation mode in accordance with one embodiment of the invention.

FIG. 21 illustrates an exemplary multimodal device in a telephone mode in accordance with one embodiment of the invention.

FIG. 22 illustrates an exemplary multimodal device in a music mode in accordance with one embodiment of the invention.

FIG. 23 illustrates an exemplary multimodal device in a gaming mode in accordance with one embodiment of the invention.

FIG. 24 illustrates an exemplary multimodal device in a camera mode, in a landscape orientation, in accordance with one embodiment of the invention.

FIG. 25 illustrates an exemplary multimodal device in a camera mode, in a portrait orientation, in accordance with one embodiment of the invention.

FIG. 26 illustrates an exemplary multimodal device in a playback mode in accordance with one embodiment of the invention.

FIG. 27 illustrates an exemplary multimodal device in a video capture mode in accordance with one embodiment of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION OF THE INVENTION

Embodiments of the invention are now described in detail. Referring to the drawings, like numbers indicate like parts throughout the views. The apparatus components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used in the description herein and throughout the claims, the following terms take the meanings explicitly associated herein, unless the context clearly dictates otherwise: the meaning of "a," "an," and "the" includes plural reference, the meaning of "in" includes "in" and "on." Relational terms such as first and second, top and bottom, and the like may be used solely to distinguish one entity or action from another entity or action without necessarily requiring or implying any actual such relationship or order between such entities or actions. Also, reference designators shown herein in parenthesis indicate components shown in a figure other than the one in discussion. For example, talking about a device (100) while discussing figure A would refer to an element, 100, shown in figure other than figure A.

It will be appreciated by those of ordinary skill in the art having the benefit of this disclosure that embodiments of the invention described herein may be comprised of one or more conventional processors and unique stored firmware or software program instructions that control the one or more processors to implement, in conjunction with certain non-processor circuits, some, most, or all of the functions of a mode-based user interface. The non-processor circuits may include, but are not limited to, a radio receiver, a radio transmitter, signal drivers, clock circuits, power source circuits, and user input devices. Further, it is expected that one of ordinary skill, notwithstanding possibly significant effort and many design choices motivated by, for example, available time, current technology, and economic considerations, when guided by the concepts and principles disclosed herein will be readily capable of generating such software or firmware instructions and programs, as well as the non-processor circuits, with minimal experimentation.

A portable electronic device, such as a mobile telephone, includes a user interface for receiving a touch input. The user interface includes a cover layer, which may be plastic or glass, for protecting the interface. A capacitive sensor layer is disposed beneath the cover layer. The capacitive sensor layer is configured to be a "proximity detector" to detect the presence of an object, such as a user's finger, near to or touching the user interface. The capacitive sensor layer may optionally be configured to determine the location of an object along the device as well.

A segmented optical shutter layer, which in one embodiment is a low-resolution, twisted nematic liquid crystal display, is disposed beneath the cover layer and is configured to present multiple interface configurations to a user. By opening and closing geometrically specific "shutters", the optical shutter layer may present a plurality of mode-base user interfaces or keypad configurations along a keypad region of the device. The shutters in the low-resolution display comprise selectively operable segments that are configured to transition between an opaque state and a translucent state, thereby revealing and hiding user actuation targets. In one embodiment, the user actuation targets are each geometrically configured as either alphanumeric keys or predetermined symbol keys. Examples of predetermined symbol keys include a photo capture key, a call send key, a call end key, a play key, a record key, a pause key, a forward key, and a reverse key.

Embodiments of the present invention provide a dynamic keypad interface capable of selectively presenting, and optionally actively illuminating, various keypad configurations to simplify the overall user input of the device. In one embodiment, the keypad configurations are limited to only the keys necessary for either the current mode of operation or for navigation between the multiple modes. The optical shutter layer opens shutters to either reflect incident light in a transflective mode, to provide a high-resolution keypad in bright-light environments, or by way of electroluminescent layer project light through the shutter openings, to provide a high-resolution keypad in low-light environments. Electrical impulses, which are applied to specially shaped, translucent electrodes, enable key graphics or icons to be selectively opened or closed, i.e. turned on or off, to match the operating mode of the device.

In one embodiment, the cover layer comprises a layer of thin film plastic. By using such a cover layer, embodiments of the invention enable both a dynamic user interface and a seamless industrial design form factor. The user interface, which is substantially planar in one embodiment, provides a selectively unobstructed, smooth keypad surface.

When the optical shutter device is in the off state, in one embodiment, it is in an opaque state. The optical shutter therefore prohibits light from being transmitted into, or out of, the device. This results in visually masking the various layers of the user interface disposed below the optical shutter. In the inactive state, the optical shutter creates a uniformed colored surface across the face of the device. In one embodiment, the exterior housing of the device is chosen to match the color of the optical shutter in the off state. As such, when the optical shutter is off, the user interface appears to be a blank surface having the same color as the housing.

In one embodiment, the optical shutter is disposed not only atop the keypad region, but also atop the display region and a corresponding high resolution display. This particular construction visually hides the high-resolution display when the device is OFF or in a low power mode. Slots and gaps are not required in the user interface of the present invention because an electrical switch layer configured to sense key actuation requires only a small deflection of the cover layer (∼40um). Further, some force sensing technologies may require virtually no deflection at all - only changes in pressure. As such, the traditional keypad mechanical dome, or "popple", which requires tenths of millimeters of travel for actuation, is not required. The result is a smooth, seamless user interface without protrusions or indentations. In one embodiment, a tactile feedback mechanism is included to inform the user when a key is actuated.

In one embodiment, the invention employs key locations that are common to multiple keys, each being used in a different mode. Thus, a first key may appear at a particular location in a first mode of operation, while a second key may appear at the same location in an alternate mode of operation. This "multiple key in the same spot" capability conserves user interface space, thereby facilitating a smaller overall device. Multiple icons or keys may be positioned within a user interface region that would be occupied by a single key in a conventional device.

The capacitive sensor layer, in one embodiment, enables both navigation and proximity sensing. The capacitive sensor layer may be employed for complex user inputs, including device navigation or scrolling through large lists or menus. Further, the capacitive sensor layer may be used for proximity sensing to determine when the device is about to be touched. Such sensing may be employed to wake the device from an idle mode. Additionally, this sensing may be used to reduce power consumption, perhaps by putting a high resolution display in a power saving mode when the device is being used as a telephone and is being held to the user's head.

In one embodiment, the invention includes a portable electronic device, wherein the user interface includes both the capacitive sensor layer, acting as a capacitive touch sensor, and a resistive switch layer, acting as a touch sensor, to detect key actuation. These sensor layers are coupled to the optical shutter, thereby forming the dynamic keypad.

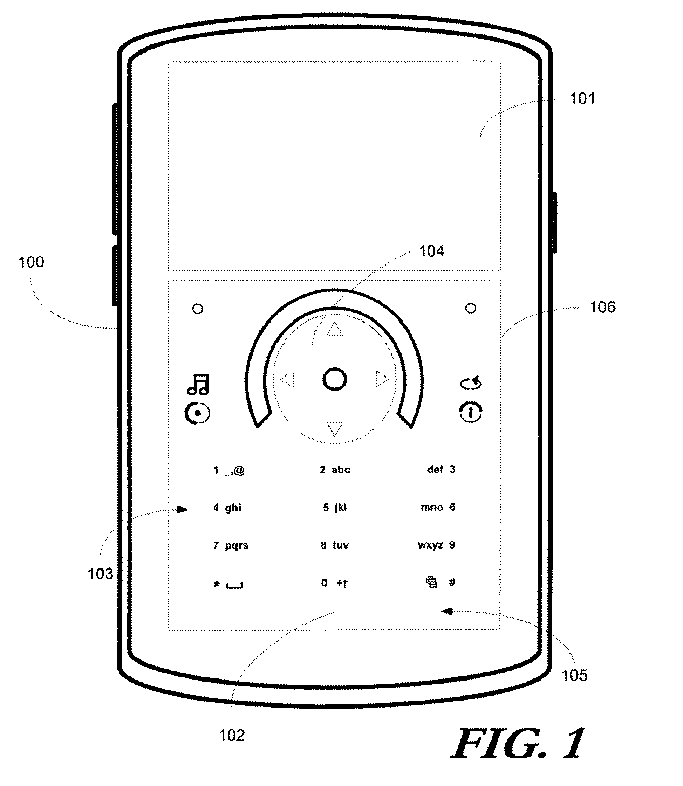

Turning now to FIG. 1, illustrated therein is portable electronic device 100 comprising a pixilated display device, one embodiment of which is a high resolution display 101, and a segmented display device, one embodiment of which is a low resolution display 102. The segmented display device is configured as an optical shutter to present a mode-based dynamic keypad 103 to a user. In addition to the pixelated display device and the segmented display device, the exemplary embodiment shown in FIG. 1 also includes a continually accessible navigation device 104. The navigation device 104 is disposed adjacent to the high-resolution display 101 and the low-resolution display 102. The navigation device 104 is used, among other things, for navigating among different modes of the device 100.

The navigation device 104, in one embodiment, comprises a scroll device, which in the exemplary embodiment is a rounded - or sometimes circular - scroll wheel device. Devices other than a wheel, including strips and other shaped surfaces may also be employed. The scroll wheel may be selectively actuated to allow a user to scroll through long lists. By way of example, where the device 100 includes a music player, a user may be able to slide a finger about the scroll wheel to navigate through the various songs. Similarly, the user may be able to navigate through the various modes of the device using the scroll wheel.

The pixilated display device, shown in FIG. 1 as a high-resolution display 101, comprises a liquid crystal display (LCD) configured to present device information to the user. The term "pixilated display device" is used herein to refer to a device that can present text and images to a user by altering a large number of pixels which, when viewed collectively by a user, form the presented text or image. One embodiment of a pixilated display device is a high resolution display device. The term "high resolution" is used herein to mean a display suitable for the presentation of text, information, and graphics on a mobile device with sufficient granularity as to be easily switched between graphics or text. For example, the high-resolution display would be one suitable for presenting an image in the Joint Photographics Expert Group (JPG) format to the user. Such displays generally are configured to turn on and off individual pixels by way of a display driver for the presentation of high-resolution information. Examples include a 256 pixel by 128 pixel reflective or backlit LCD. Such display devices are manufactured by Samsung and Sony.

The front surface 105 of the device 100 forms the overall user interface. In a keypad region 106, the optical shutter (described in more detail below) provides a dynamic user input interface. This dynamic user interface is configured to present different indicators, which may appear as keys or actuation targets, across the user interface in the keypad region 106. To keep the high-resolution display 101 clutter free, the dynamic user interface presents these keys in areas other than across the high-resolution display 101.

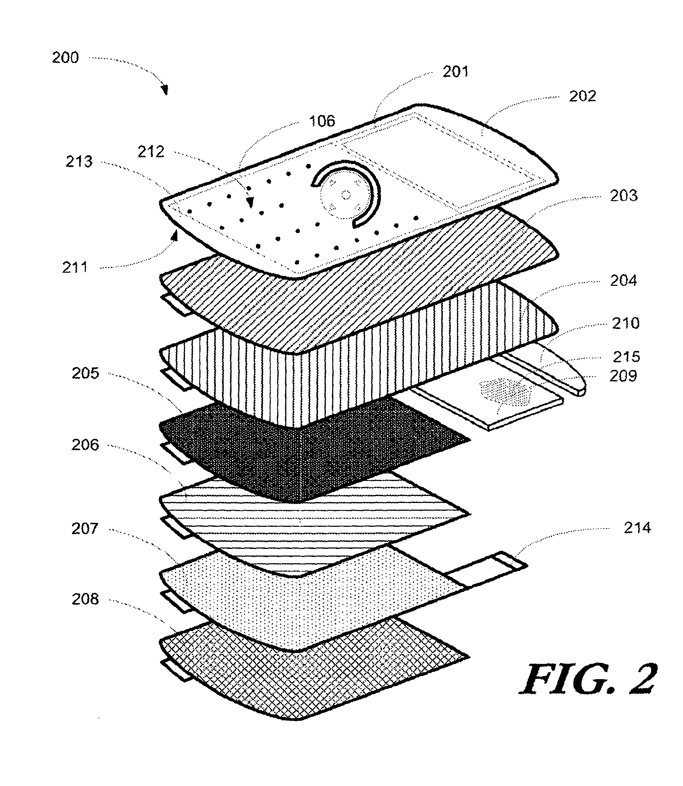

Turning now to FIG. 2, illustrated therein is an exploded view of a dynamic user interface 200 for a portable electronic device (100) in accordance with one embodiment of the invention. The user interface 200 includes a dynamic keypad region 106 and a display region 201 atop the display. The user interface 200 is made from several layers, each layer implementing a different function. While several layers are shown, it will be clear to those of ordinary skill in the art having the benefit of this disclosure that each and every layer may not be required for a specific application. By way of example, a backlight (provided by the electroluminescent layer described below) may not be needed for all devices. The structure of FIG. 2 is exemplary.

The user interface 200 of FIG. 2 includes the following components: a cover layer 202; a capacitive sensor 203; a segmented optical shutter 204; an electroluminescent device 205, a resistive switch layer 206; a substrate layer 207; and a tactile feedback layer 208. Additionally, a high-resolution display 209 and filler materials 210 may be included to complete the assembly. While the layers are shown individually, it will be clear to those of ordinary skill in the art having the benefit of this disclosure that some of the various layers may be combined together. For instance, the cover layer 202 and capacitive sensor 203 may be integrated together to form a single layer. Similarly, the tactile feedback layer 208 may be integrated into the cover layer 202, and so forth.

Starting from the top with the cover layer 202, a thin film sheet serves as a unitary fascia member for the device (100). A "fascia" is a covering or housing, which may or may not be detachable, for an electronic device like a mobile telephone. While the drawings herein employ a mobile telephone as an exemplary electronic device for discussion, it will be clear to those of ordinary skill in the art having the benefit of this disclosure that the invention is not so limited. The fascia of the present invention could be used for any electronic device having a display and a keypad.

The cover layer 202, in one exemplary embodiment, is a thin, flexible membrane. Suitable materials for manufacturing the thin, flexible membrane include clear or translucent plastic film, such as 0.4 millimeter, clear polycarbonate film. In another embodiment, the cover layer 202 is manufactured from a thin sheet of reinforced glass. The cover layer, being continuous and without holes or other apertures or perforations, is well suited to serve as a continuous fascia for the device (100), keeping dust, debris and liquids from invading the device. While the cover layer 202 is continuous, for discussion purposes, the cover layer 202 will be colloquially sectioned into a keypad region 106 and a display region 201. The keypad region 106 is the section of the cover layer 202 where user actuation targets, keys, and buttons will be presented, while the display region 201 is the section of the cover layer 202 where the high-resolution display 209 is visible.

To provide ornamentation, text, graphics, and other visual indicators, the cover layer 202, in one embodiment, includes printing disposed on the rear face 211. As will be described in more detail below, in one embodiment of the invention, the low-resolution display, i.e. the optical shutter layer 204, provides graphics and color for the front surface (105) of the device (100). However, even in such an embodiment, selective printing on the cover layer may be desirable. For instance, printing may be desired around the perimeter of the cover layer 202 to cover electrical traces connecting the various layers, or electrodes on certain layers. Additionally, printing of select demarcations 212 may be desirable. As will be described below, in one embodiment, when the device is off, the font surface (105) goes completely blank. Demarcations 212, which may be very light, small circles, provide the user with an indication of which portion of the front surface (105) is the keypad region 106, and which portion is the display region 201.

Printing may be desired on the front face 213 for various reasons as well. For example, a subtle textural printing or overlay printing may be desirable to provide a translucent matte finish atop the device (100). Such a finish is useful to prevent cosmetic blemishing from sharp objects or fingerprints. By printing only on the rear face 211, however, the front face 213 can remain smooth and glossy. When printing is done on the rear face 211 of the cover layer 202, the printing, being disposed on the inside of the device, is protected from wear and abrasion. There is generally no printing in the display region 201, so the high-resolution display 209 may be easily viewed. Printing about the display region 201 may be desired, however, for the reasons listed above.

The cover layer 202 may also include an ultra-violet barrier. Such a barrier is useful both in improving the visibility of the high-resolution display 209 and in protecting internal components of the device (100).

The user interface 200 also includes a capacitive sensor 203. The capacitive sensor 203, which is formed by depositing small capacitive plate electrodes on a substrate, is configured to detect the presence of an object, such as a user's finger, near to or touching the user interface 200. Control circuitry detects a change in the capacitance of a particular plate combination on the capacitive sensor 203. The capacitive sensor 203 may be used in a general mode, for instance to detect the general proximate position of an object relative to either the keypad region 106 or the display region 201. The capacitive sensor 203 may also be used in a specific mode, where a particular capacitor plate pair may be detected to detect the location of an object along length and width of the front surface (105) of the device (100). In this mode, the capacitive sensor 203 may be used to detect the proximate position of an object, such as a user's finger, relative to any of the actuation targets presented.

Turning to the segmented optical shutter 204, this layer is a segmented display device configured as an optical shutter. A "segmented" display device is used herein to mean a display device with less granularity than the pixilated display device referred to above. The segmented display device is capable of actuating a predefined segment or segments to present a predetermined text or symbol graphic to a user, but does not have sufficient granularity to easily transition from, for example, text to graphics. The term "low resolution" is used herein to differentiate the segmented display device of the optical shutter 204 from the high-resolution display 209. While the high resolution display 209 is configured to actuate individual pixels to present high resolution text or images, the low-resolution display of the optical shutter 204 uses electrodes placed atop and beneath the optical shutter 204 to open and close "windows", thereby transforming the window from a first, opaque state to a second, translucent state. The optical shutter 204 is "segmented" because individual windows, or shutters, may be controlled. Further, as will be seen in more detail below, by configuring the electrodes on one side of the optical shutter 204, each shutter can be configured as the alphanumeric indicia, which may include numbers, letters, or symbols forming images representative of a plurality of actuatable keys. In one embodiment, the alphanumeric indicia may comprise graphics corresponding to a telephone keypad.

The optical shutter 204 is configured to present a plurality of keypad configurations to a user. Each keypad configuration, in one embodiment, corresponds to a particular mode of operation of the device (100). For example, a camera mode may correspond to a first keypad configuration, while a phone mode may correspond to an alternate configuration. The optical shutter 204 presents each of the plurality of keypad configurations by transitioning segments of the segmented optical shutter 204 from opaque states to translucent states. When translucent, light can pass through each shutter. When opaque, no light passes through. The result is a reveal and concealment of each individual key. Each key forms an actuation target that can be selected by the user.

An optional electroluminescent device 205 may be included to provide a backlighting function to the shutters of the optical shutter 204. As used herein, "electroluminescent" refers to any device capable of producing luminescence electrically, including light emitting diodes, and equivalent devices. Such a function is useful in improving the visibility of the keypad region in low-light conditions. In one embodiment, the electroluminescent device 205 includes a layer of backlight material sandwiched between a transparent substrate bearing transparent electrodes on the top and bottom. The electrodes, which may be segmented and patterned to correspond with the shutters of the optical shutter 204. One electrode is an actuation electrode, while another electrode is a ground electrode. Where the electrodes are segmented, the actuation electrode is generally patterned. The high resolution display 209, which may have its own lighting system and may also include a polarizing layer 215 configured to polarize light along an axis of polarization, may be placed adjacent to the electroluminescent device 205. Further, filler material 210 may be included to complete the assembly.

The resistive switch layer 206 includes a force switch array configured to detect contact with any of one of the shutters dynamic keypad region or any of the plurality of actuation targets. An "array" as used herein refers to a set of at least one switches. For instance, where the cover layer 202 is manufactured from glass, one switch may be all that is necessary. However, when the cover layer 202 is manufactured from thin film plastic, multiple switches may be employed. The array of resistive switches functions as a force-sensing layer, in that when contact is made with the front surface (105), changes in impedance of any of the switches may be detected. The array of switches may be any of resistance sensing switches, membrane switches, force-sensing switches such as piezoelectric switches, or other equivalent types of technology.

When the cover layer 202 is made from thin plastic film, an array of switches may be included on the resistive switch layer to detect the proximate location of a finger actuating one of the keys. Experimental results have shown that a deflection of as little as 40um along the cover layer is sufficient to actuate one of the resistive switches. When the cover layer 202 is made from glass, the capacitive sensor 203 may be used to detect the proximate location, while one or more switches on the resistive switch layer 206 may be used to detect actuation of the rigid cover layer 202. By employing control circuitry to combine this data, the exact shutter actuated may be properly detected.

A substrate layer 207 is provided to carry the various control circuits and drivers for the layers of the display. The substrate layer 207, which may be either a rigid layer such as FR4 printed wiring board or a flexible layer such as copper traces printed on a flexible material such as Kapton^{®}, includes electrical components, integrated circuits, processors, and associated circuitry to control the operation of the display. The substrate layer 207 includes a connector 214 for coupling to other electrical components within the device (100).

As noted in the discussion of the resistive switch layer 206, in one embodiment a modicum of deflection is all that is required to actuate one of the keys presented by the optical shutter 204. Where the cover layer 202 is manufactured from thin film plastic, a minor deflection of the plastic will actuate a switch on the resistive switch layer 206. Where the cover layer 202 is manufactured from glass, a minor deflection of the entire cover layer 202 will actuate a switch on the resistive switch layer 206. This deflection is on the order of tens of micrometers. As such, a user may not perceive any deflection at all when pressing each key.

To provide tactile feedback, an optional tactile feedback layer 208 may be included. The tactile feedback layer 208 may include a transducer configured to provide a sensory feedback when a switch on the resistive switch layer detects actuation of a key. In one embodiment, the transducer is a piezoelectric transducer configured to apply a mechanical "pop" to the user interface 200 that is strong enough to be detected by the user. Thus, the tactile feedback layer provides sensory feedback to the user, thereby making the smooth, substantially planar user interface 200 react like a conventional keypad without the need of individual popple-enabled keys protruding through the keypad.

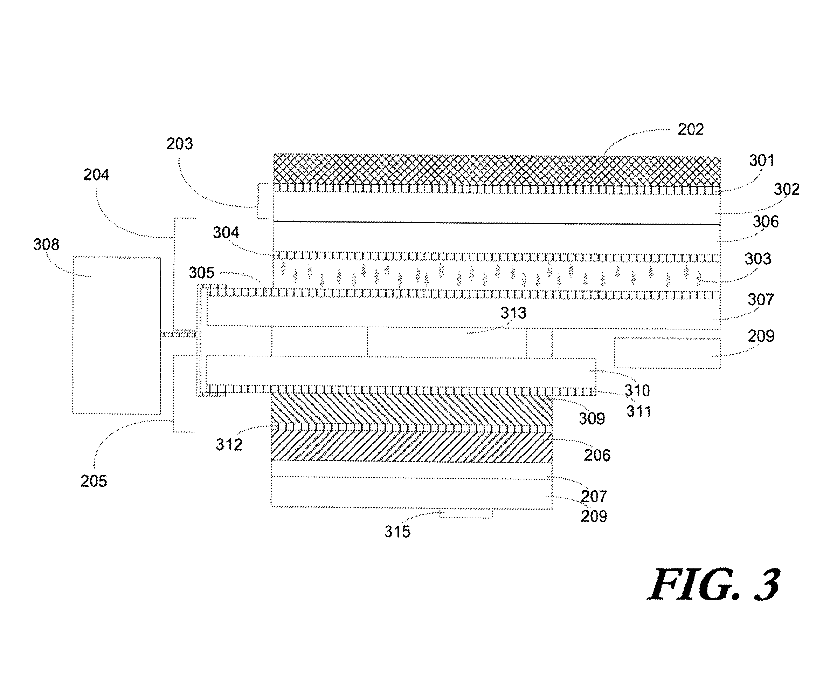

Turning now to FIG. 3, illustrated therein is a side view of the user interface (200) shown in FIG. 2. Each layer may be seen from the side in a cut-away view. Again, it will be clear to those of ordinary skill in the art having the benefit of this disclosure that the invention is not limited to the specific structure shown in FIG. 3. Some layers, as noted above, are optional and may not be included in certain applications.

Note that the layers may be coupled together in any of a variety of ways. One exemplary embodiment of a coupling mechanism is by using a thin layer of clear (transparent), non-conductive adhesive. For instance, the cover layer 202, the capacitive sensor 203, and the segmented optical shutter 204 may each be mechanically coupled together with non-conductive, translucent adhesive. This coupling keeps the overall assembly properly aligned within the device.

When viewing from the top, a user first sees the cover layer 202, which may be either a thin film plastic or glass layer. Where glass is used, reinforced glass is often preferred to provide additional reliability to the user interface (200). The glass may be reinforced by a strengthening process, such as a chemical or heat treatment process. As noted above, the cover layer may include printing disposed thereon.

Next, the capacitive sensor 203 may be seen. The capacitive sensor 203 includes both an electrode layer 301 and substrate layer 302. The substrate layer 302, which may be either rigid, or soft (for instance a silicone layer), carries the electrode plates that form the capacitive sensors. The electrodes may be used in a singular configuration, or in pairs. Further alternate electrode pairs, including electrode groupings of two, four, or six electrodes, may be used to form the capacitive sensors. The electrode layer 301, as will be described in more detail below, may be formed by printing solid indium-tin oxide (In.sub.2 O.sub.3-SnO.sub.2) (ITO) in the desired capacitor plate patterns atop the substrate layer 302. Other materials, including patterned conductive inks, may also utilized in the electrode construction.

Next, the optical shutter 204 may be seen. In one embodiment, the optical shutter is manufactured using a twisted nematic liquid crystal display material. This material will be discussed herein as an exemplary embodiment. However, it will be clear to those of ordinary skill in the art having the benefit of this disclosure that the invention is not so limited. Other materials, including polymer-dispersed liquid crystal material, super twisted nematic liquid crystal material, ferro-electric liquid crystal material, electrically-controlled birefringent material, optically-compensated bend mode material, guest-host materials, and other types of light modulating may equally be used.

The optical shutter 204 is made from a twisted nematic liquid crystal display material 303 that is sandwiched between two electrodes 304,305 and two substrates 306,307. The electrodes 304,305 and substrates 306,307 are preferably transparent, such that light can pass freely through each. The substrates 306,307 may be manufactured from either plastic or glass. The upper electrode 304 is constructed, in one embodiment using indium-tin oxide affixed to substrate 306. The lower electrode 305 is constructed using a patterned indium-tin oxide layer affixed to the lower substrate 307. In one embodiment, the patterns are those of alphanumeric keys or symbols representing keys or user actuation targets of the device. Where it suits the particular design or application, both electrodes 304,305 can be patterned; however, user visibility may be affected where both electrodes 304,305 are patterned. The patterned electrode(s) 305, by way of patterned electrical traces, is connected to a control circuit 308. The control circuit 308 applies a field to the patterned electrode(s) 305, while the other electrode 304 acts as a ground. The direction of the electric field is not important to the optical shutter 204, thus either electrode can act as the ground.

The electric field applied, as will be described in more detail below, alter the light transmission properties of the twisted nematic liquid crystal display material. The electric field can cause sections under each of the patterned electrodes 305 to transition from a first state to a second state. By way of example, the first state may be opaque, while the second state is translucent. The patterns of the patterned electrodes 305 define the images of each shutter in the optical shutter. By way of example, a shutter can be patterned as a "9 key" for a phone by patterning one electrode as a box (i.e. the boundary of the key), and another electrode as the "9 wxyz" characters. The shutters thus act as "windows" that can be open or closed, to reveal or hide images.

The optical shutter 204 may also include one or more polarizing layers disposed atop and beneath the optical shutter. These polarizing layers, which are used in twisted nematic liquid crystal devices as will be shown below, polarize light along a polarization axis.

The electroluminescent device 205 includes a layer of electroluminescent material 309 sandwiched between a transparent substrate 310 bearing a single, or patterned, indium tin oxide electrode(s) 311 and a ground electrode 312. In one embodiment, the patterned electrode 311 of the electroluminescent device 205 is aligned with the various shutters of the optical shutter 204. In such an embodiment, the ground electrode 312 may comprise a solid conductive ink layer printed on the bottom surface of the electroluminescent material 309; however, the ground electrode 312 may be patterned and may be borne on a transparent or non-transparent substrate if desired. One electrode layer 301 is connected to control circuitry 308. Like the optical shutter 204, either electrode layer 311,312 can act as the ground.

In one embodiment, the electroluminescent device 205 includes a transflector layer. The transflector layer, which is a semi-transparent material configured to both reflect light and pass light, permits the operation of the device (100) in a transflexive mode. In the transflexive mode, when any shutter of the optical shutter 204 opens, incident light passes through the shutter, reflects off the transflector layer, and is passes back to the user. This action makes the various keys visible in bright light conditions. When the electroluminescent device 205 is operational, which may be dictated by an ambient light sensor, the transflector passes light from the electroluminescent device through the open shutters. This action makes the various keys visible in low light conditions.

An optional color layer 313 may be included atop the electroluminescent device 205 having one or more colors. The color layer 313, which may also be a transflector having both transmission and reflection properties, may be used to color light coming from the electroluminescent device 205. The color layer 313 may alternatively be made of color filters, which only have transmission properties.

As, in one embodiment, the electroluminescent device is configured to be used only with the keypad region (106), the high-resolution display 209 may be placed proximately with the electroluminescent device. As mentioned above, in one embodiment, the high-resolution display 209 includes a polarizing layer (215) disposed above the high-resolution display. This polarizing layer (215), includes a transmission axis along which light is polarized. Where the optical shutter 204 is a twisted nematic liquid crystal device having a top and bottom polarizer, the polarizing layer (215) is configured and positioned such that the transmission axis of the polarizing layer (215) is substantially parallel to the transmission axis of the bottom polarizer of the optical shutter.

In one embodiment, the high-resolution display 209 is disposed at least partially under the optical shutter 204. In such an embodiment, the optical shutter 204 passes beneath the display region (201), thereby covering at least a portion of the high-resolution display 209. Thus, when a shutter above the high-resolution display 209 closes, the high-resolution display 209 is completely hidden. Thus action gives the overall device (100) a "blank" face when the device (100) is OFF. Beneath the electroluminescent device 205 are the resistive switch layer 206, the substrate layer 207, and the tactile feedback layer 208 with its transducer 315.

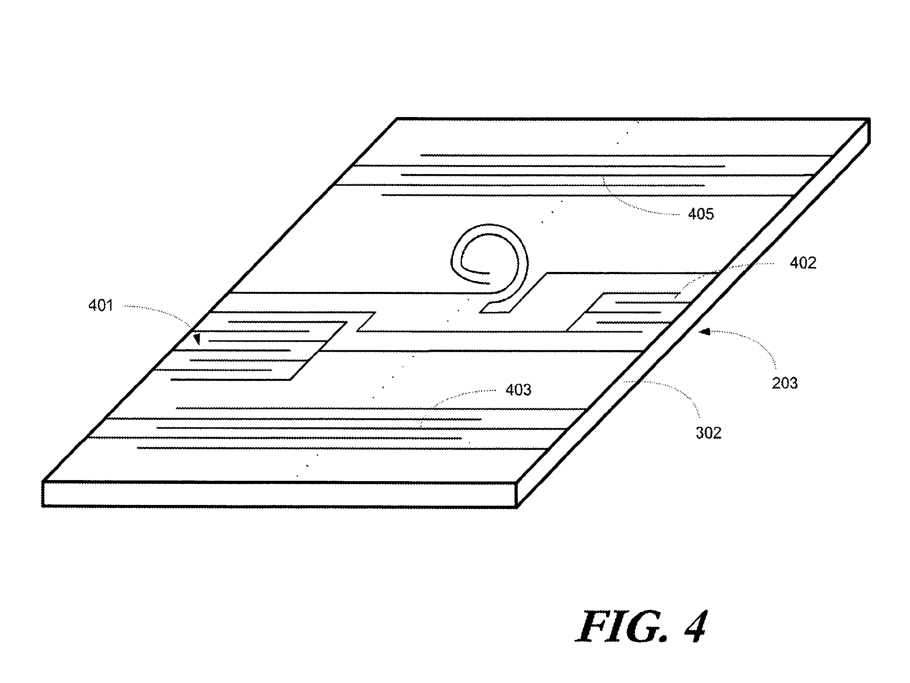

Turning now to FIG. 4, illustrated therein is a more detailed view of the capacitive sensor 203. The capacitive sensor 203 includes a plurality of capacitive sensing devices 401,402,403,404 disposed along a substrate 306. The capacitive sensing devices 401,402,403,404 may be disposed both beneath the keypad region (106) and about the display region (201). Each capacitive sensing device 401,402,403,404 is configured, in conjunction with associated control circuitry (not shown) to detect an object in close proximity with - or touching - the portable electronic device (100).

The capacitive sensing devices 401,402,403,404, as mentioned above, in one embodiment are formed by disposing indium tin oxide atop the substrate 306. Indium tin oxide is a mixture of indium oxide and tin oxide. It is transparent and conductive, and is capable of being deposited in thin layers by way of a printing process. Indium tin oxide is well suited for the present invention due to its combination of electrical conduction properties and optical transparency. The capacitive sensing devices 401,402,403,404 may be deposited on the substrate by electron beam evaporation, physical vapor deposition, or other various sputter deposition techniques.

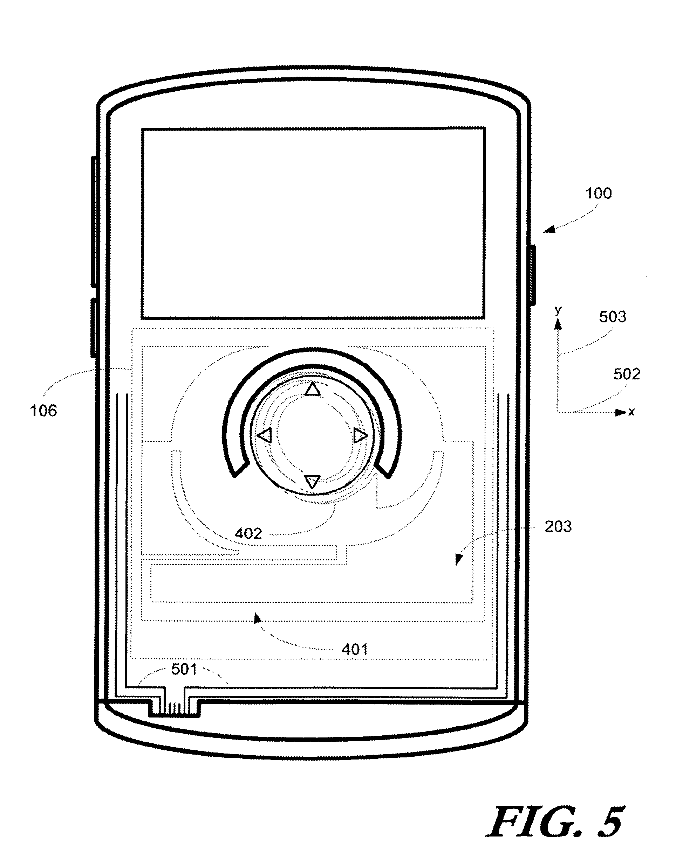

Turning now to FIG. 5, illustrated therein is am operational view of the capacitive sensor 203. The various capacitor electrodes, e.g. 401,402, may be seen to detect the proximity of an object near the keypad region 106. Various electrical leads 501 connect the capacitive sensing devices 401,402 to control circuitry. The capacitive electrodes 401,402 function as a proximity detection device configured to detect objects proximately located with the user interface. When an object comes into near or into contact with the device 100, the capacitance of one of the capacitive sensing devices near the object changes. The control circuitry detects this change and alerts processing circuitry within the device 100.

This proximity detection may be used for a variety of functions. As noted above, the proximity detection may be used to detect the position of the object in the x and y directions 502,503. Thus is useful when the cover layer (202) is made from a rigid material, such as glass. Further, the proximity detection may be used to transition the device 100 from a first mode to a second mode. By way of example, when the device is either OFF or in a low power state, a user may wake the device by touching the front surface (105) of the device 100. The proximity detection, detecting the user's finger, may cause the device 100 to wake from the low power state. This waking may include causing the optical shutter (204) to present a keypad configuration associated with a default or previous mode.

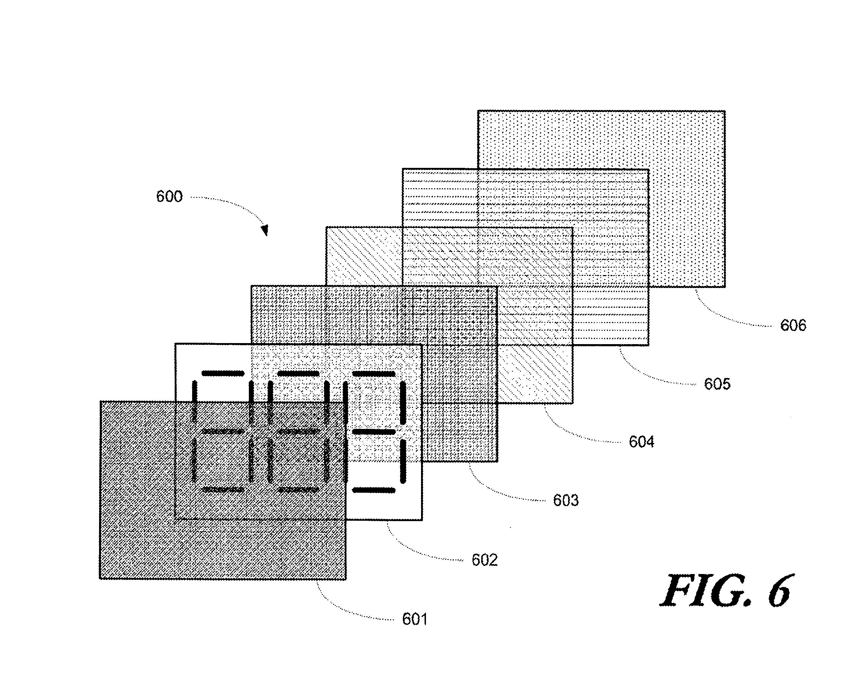

Turning now to FIG. 6, illustrated therein is an exploded view of a twisted nematic liquid crystal display device 600. The device 600, which in one embodiment is used to form the optical shutter (204), is referred to as "twisted" because it contains liquid crystal elements that twist and untwist in differing amounts to allow light to pass through.

A first polarizer 601 is disposed on one side of the device to polarize incident light. A substrate 602, having indium tin oxide electrodes (as previously discussed) printed in varying shapes is disposed adjacent to the polarizer. The electrodes may be disposed in shapes that correspond to the alphanumeric keys or symbols associated with the keys of the electronic device (100).

Twisted nematic liquid crystal material 603 is then next, followed by another substrate 604 configured with ground electrodes. A horizontal filter 605 then is used to permit and block light. A reflective or transflective surface 606 then reflects light back (in a reflective mode) or transmits light in a transflective mode. The reflective or transflective surface 606 is optional and will depend upon the particular application. When the twisted nematic liquid crystal device is used as an optical shutter, the reflective or transflective surface 606 may not be employed.

Where no voltage is applied to the electrodes, the device is in a first state. When voltage is applied the liquid crystal material twists - in incremental amounts up to 90 degrees - thereby changing the luminous polarization. This liquid crystal thus acts as a controllable polarizer, controlled by electrical signals applied to the electrodes. Adjustment of the voltage being applied to the electrodes permits varying levels grey, as well as transparent states or opaque states to be created. Embodiments of the present invention use this device as a low-resolution display to reveal and hide keys.

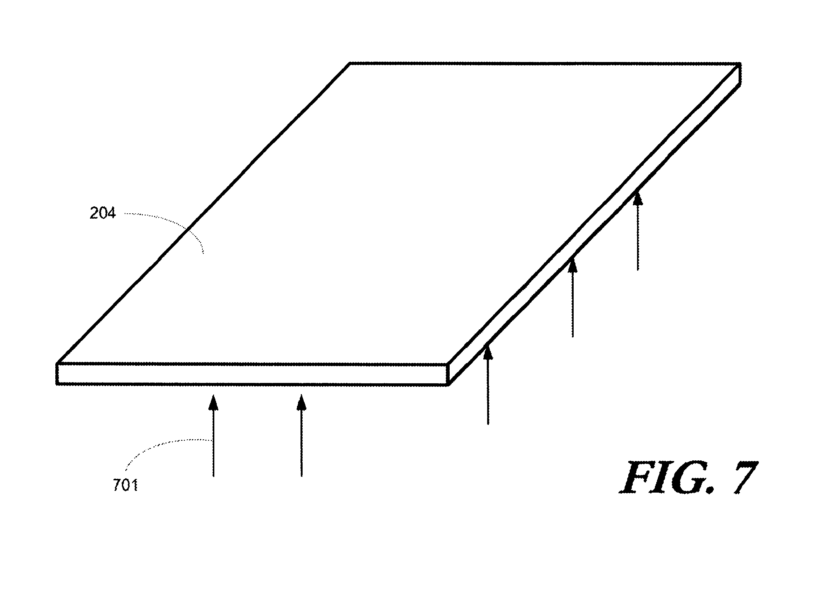

Turning now to FIG. 7, illustrated therein is the optical shutter 204 in an opaque state. Incident light 701 is not permitted to pass through the optical shutter, as the liquid crystal material is twisted, relative to the polarizers, so as to block light from passing through.

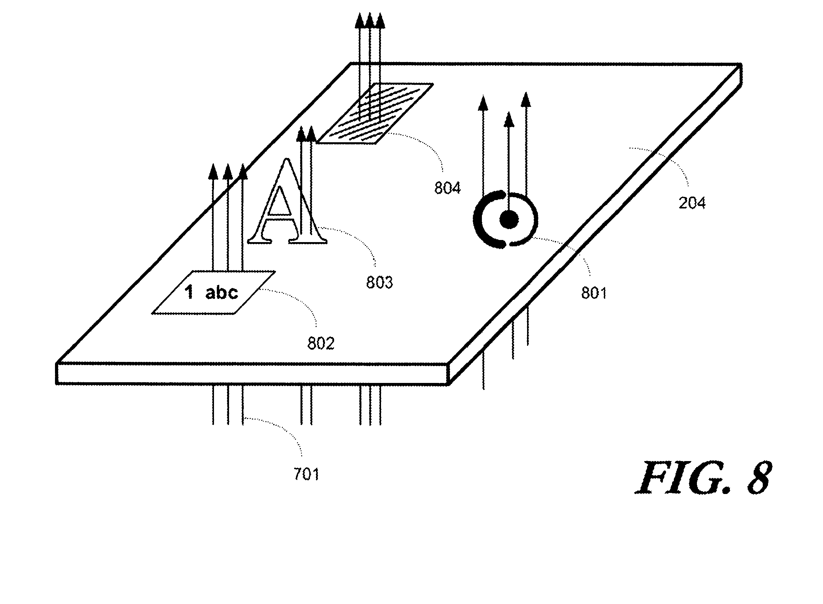

Turning now FIG. 8, illustrated therein is the optical shutter 204 when various exemplary shutters 801,802,803,804 have been transitioned from the opaque state to the translucent state. Control circuitry, which may be disposed on the substrate layer 207, is configured to selectively actuate at least one shutter or cell, perhaps based upon a current operational mode of the device (100), to transform the shutter from a first cell state to a second cell state.

Each shutter, which acts as a segment within the optical shutter 204, corresponds to a key or a particular window (such as a window above the high resolution display (209)), such that when each of the of segments is actuated, the key becomes visible to a user. Incident light 701 passes through the shutters 801,802,803,804, thereby making the shape of the shutter visible. By way of example, where the device (100) includes an electroluminescent device 205, light from the electroluminescent device may project through the shutters 801,802,803,804 when open. This would be operation in a transmissive mode. The electroluminescent device (205) may be configured to only operate in low ambient light conditions. Where the device (100) includes a transflector, light may pass through each shutter 801,802,803,804, reflect off the transflector, and pass back through each shutter 801,802,803,804. This is operation in a transflective mode.

The exemplary shutters 801,802,803,804 of FIG. 8 have been geometrically configured as a particular key symbol for the portable electronic device. These keys and symbols are exemplary only, as it will be clear to those of ordinary skill in the art having the benefit of this disclosure that many different shapes and sizes. Each shutter 801,802,803,804 forms a user actuation target by transitioning from the first (opaque) state to the second (transparent) state.

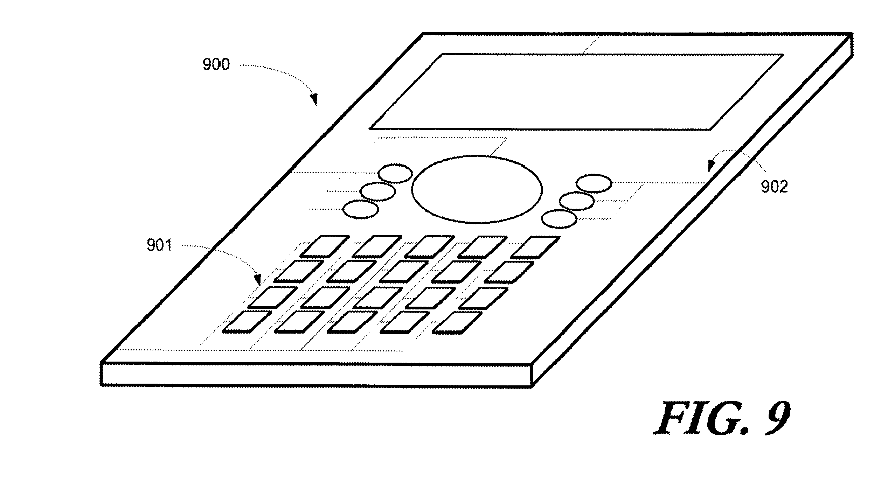

Turning now to FIG. 9, illustrated therein is one embodiment of a segmented electroluminescent device 900 in accordance with embodiments of the invention. The segmented electroluminescent device 900 includes patterned electrodes 901 that are positioned to correspond to the shutters of the optical shutter (204). By using patterned electrodes 901, light segments may be selectively actuated. In other words, when the each shutter is actuated to transition from an opaque state to a translucent state, a corresponding patterned electrode, and thus a corresponding electroluminescent cell, is actuated so as to project light through the actuated segment. This is in contrast to an electroluminescent device having a single electrode or a comprehensive ON state. By actuating selective patterned electrodes 901, only those corresponding to open shutters are actuated, thereby reducing overall power consumption of the device (100).

The segmented electroluminescent device 900 may also include a reflective or transflective layer 902 coupled thereto. For instance, the reflective layer 902 may be disposed on the top of the segmented electroluminescent device 900. As such, the segmented electroluminescent device 900 may operate in a reflective mode when the luminescent device is inactive, and in a transflective mode when the luminescent device is active. In addition to using electro luminescent materials for the segmented electroluminescent device 900 as previously described, other materials, including light emitting diode arrays, plasma panels, vacuum florescent panels, organic or polymeric light emitting diode panels, or other light source materials may also be used.

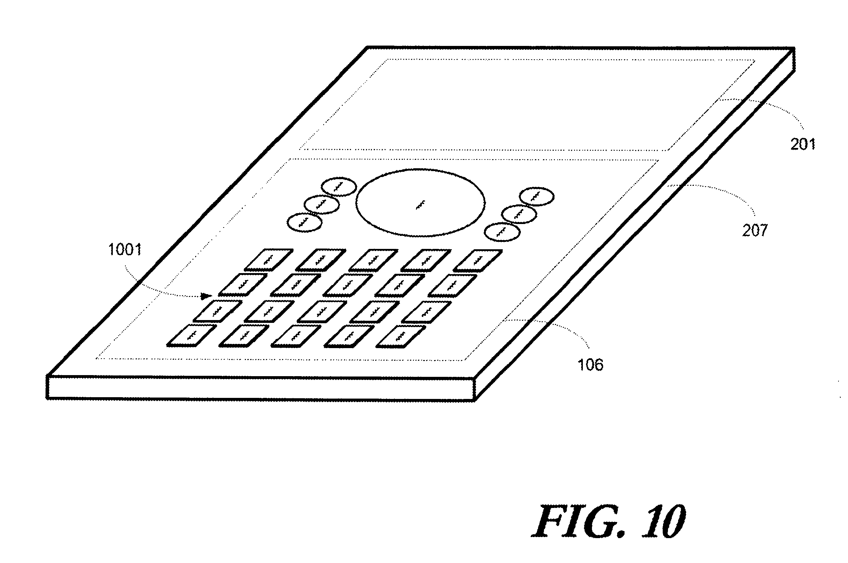

Turning now to FIG. 10, illustrated therein is the resistive switch layer 206 in accordance with embodiments of the invention. The resistive switch layer 206 operates as a resistance-sensing layer to detect when a user actuates one of the keys presented by the optical shutter (204). In the view of FIG. 10, the array 1001 of resistance switches may be seen. In one embodiment, the resistive switch layer 206, disposed beneath the cover layer (202), the capacitive sensor (203), the optical shutter (204) and the electroluminescent device (205), includes resistive switches only below the keypad region 106.

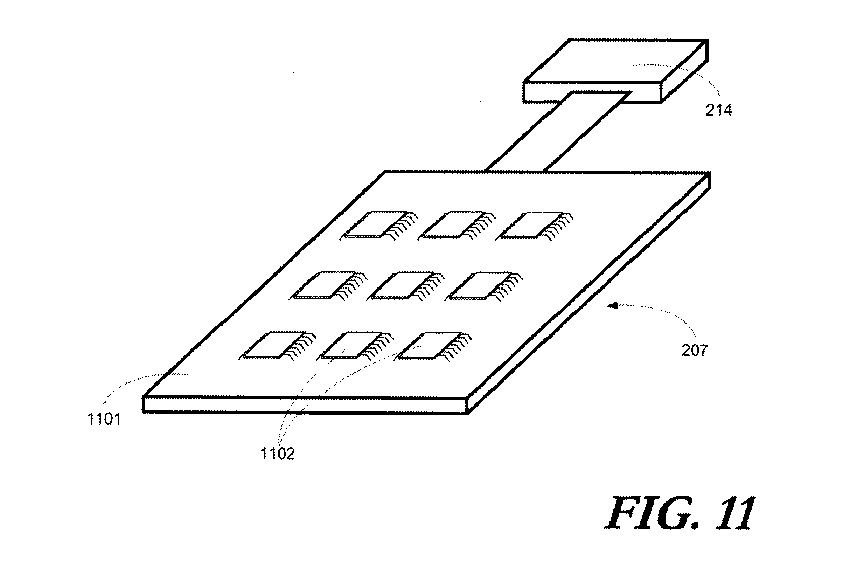

Turning now to FIG. 11, illustrated therein is one embodiment of the substrate layer 207 in accordance with the invention. The substrate layer 207 includes a flexible substrate 1101 that has copper traces disposed thereon. The copper traces electrically couple the circuitry 1102 to the flexible substrate 1101. The electrical traces extend to a connector 214 that may be connected to other circuitry or components within the device. In one embodiment, the flexible substrate 1101 and circuitry 1102, combined to form a circuit substrate assembly, includes the control circuitry that is electrically coupled to the electroluminescent device (205), the optical shutter (204), the capacitive sensor (203), and the resistive switch layer (206). This control circuitry is used to control the operation of these devices. By way of example, using the electroluminescent device (205), the control circuitry may be configured to selectively actuate one or more segments of the electroluminescent device, thereby causing the at least one segment to transform from a first, non-illuminated state to a second, illuminated state.

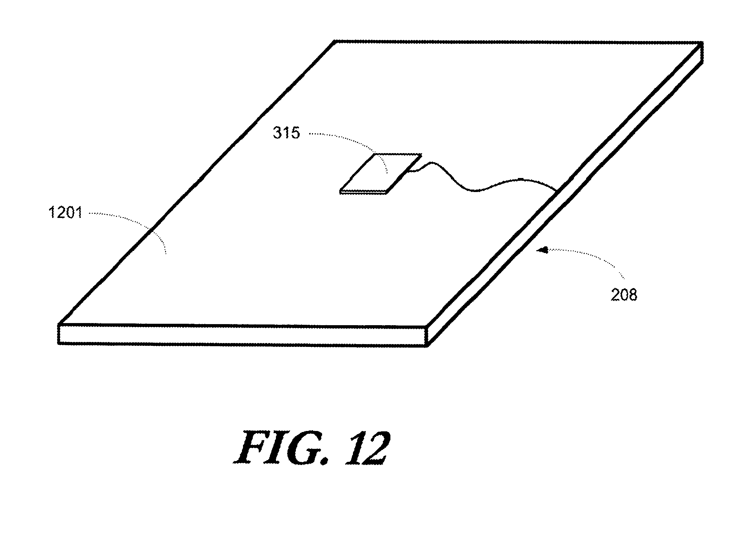

Turning now to FIG. 12, illustrated therein is one embodiment of the tactile feedback layer 208 in accordance with the invention. As mentioned above, the smooth front surface (105) of the device, in one embodiment, includes no popple-type buttons protruding through. Thus, there is nothing for the user to physically press when actuating a key. To simulate the response of a popple-type button, one embodiment of the present invention includes a tactile feedback layer 208. The tactile feedback layer 208 includes a transducer 315 to deliver a feedback sensation to the user indicating that a key has been successfully actuated. The tactile feedback layer 208, in one embodiment, is disposed beneath the resistive switch layer (206).

The tactile feedback layer 208 may be manufactured in one of a variety of ways. One exemplary embodiment of the tactile feedback layer 208 is one where a metal plate 1201 has at least one piezoelectric transducer 315 coupled thereto. A control circuit coupled to one of the capacitive sensor (203) or the resistive switch layer (206) is used to drive the transducer 315. When a key signal is received from either the capacitive sensor (203) or the resistor switch layer, the control circuit actuates the transducer 315. This actuation causes the metal plate 1201 to move or slightly deflect, thereby providing a tactile feedback to the user.

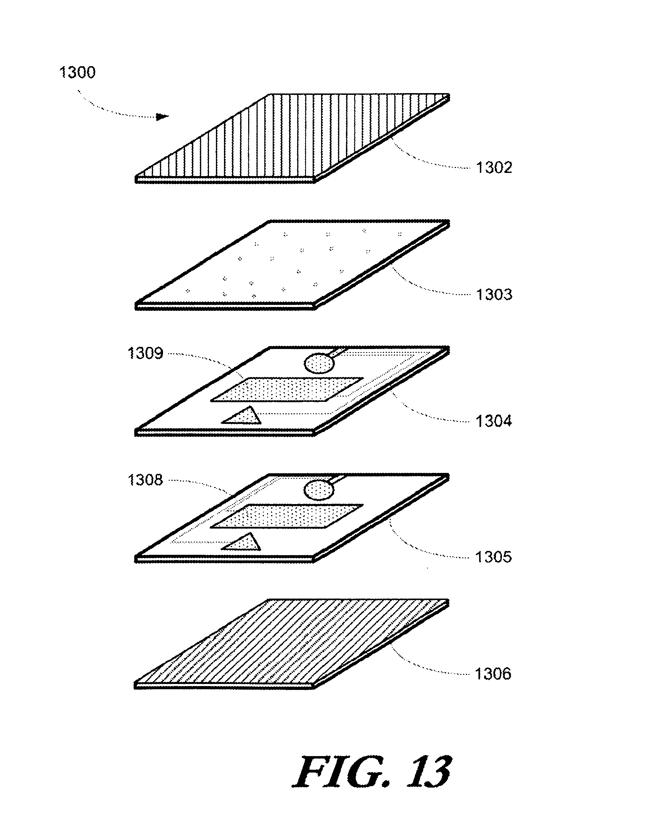

Turning now to FIG. 13, illustrated therein is an exploded view of an alternate embodiment of a user interface 1300 in accordance with embodiments of the invention. A cover layer 1302, perhaps with selective printing of non-conductive ink disposed thereon, sits atop the user interface 1300. (An alternative to the non-conductive ink that may be used is material deposited by a non-conductive vaccuum metalization process.) A capacitive sensor 1303, operating as a proximity detector, is disposed beneath the cover layer 1302. A low-resolution display 1304, having patterned electrodes 1309 disposed thereon, is disposed beneath the capacitive sensor 1303. A backlighting device 1305, having selective electrodes 1308 corresponding to the electrodes 1309 of the low-resolution display 1304, is disposed beneath the capacitive sensor 1303. A force resistive array 1306 is disposed beneath the backlighting device 1305. Each element may be coupled to the next with a clear, non-conductive adhesive so as to form the user interface assembly.

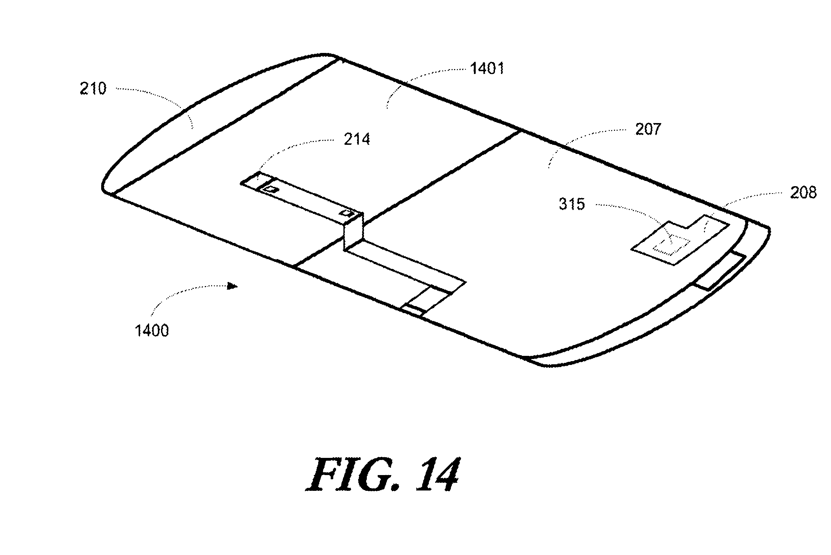

Turning now to FIG. 14, illustrated therein is an assembled user interface device 1400 in accordance with embodiments of the invention. From this rear, perspective view, some of the bottom components can be seen. A void 1401 may be seen adjacent to the substrate layer 207. This void is for receiving the high-resolution display (209) when the user interface device 1400 is coupled to the electronic device (100). Note that the high-resolution display (209) may optionally be coupled directly to the user interface device 1400 prior to coupling the user interface device 1400 to the electronic device (100). However, alignment of the high-resolution display (209) may be more easily facilitated by connecting the high-resolution display (209) to the electronic device first.

Filler material 210 has been also positioned adjacent to the void 1401 to assist in holding the assembly in proper alignment within the electronic device (100). The connector 214, coupled to the substrate layer 207, may be coupled to the electronic device (100), thereby electrically connecting the user interface device 1400 to the other electrical circuitry in the electronic device (100).

As may be seen from the view of FIG. 14, the tactile feedback layer 208 has been reduced to a small plate that is coupled to the substrate layer 207. This reduction in size offers increased protection to the electrical components that are coupled to the substrate layer 207. The transducer 315 on the tactile feedback layer 208 is cable of moving the tactile feedback layer 208 sufficiently for a user to feel the response to a key actuation.

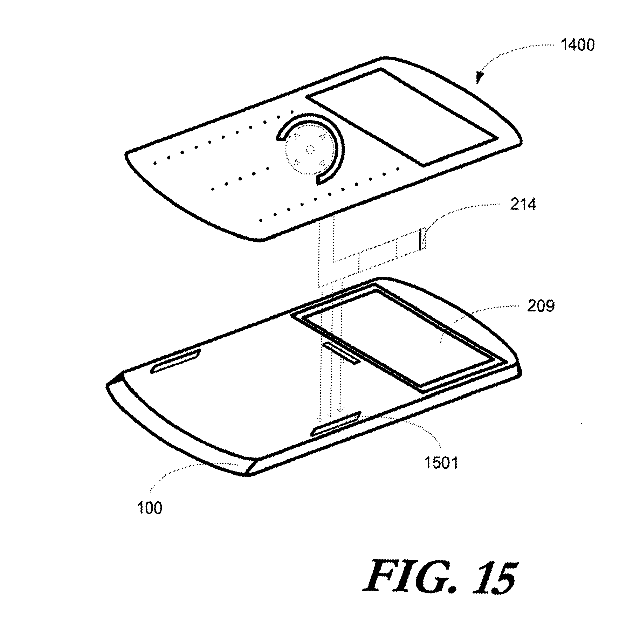

Turning now to FIG. 15, illustrated therein is the user interface device 1400 being coupled to the electronic device 100. From this exploded view, the high-resolution display 209, which may have a layer of clear, non-conductive adhesive disposed thereon, may be seen. The high-resolution display 209 sits within the void (1401) shown in FIG. 14. The connector 214 fits within a connector receptacle 1501 of the electronic device, thereby permitting an electrical connection between the user interface device 1400 and the other components and circuits of the electronic device 100.

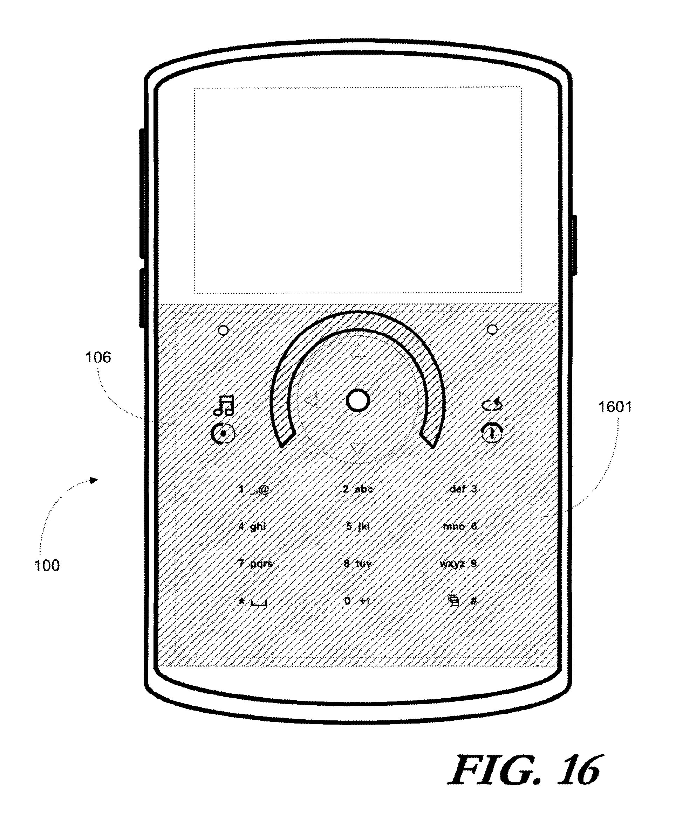

Turning now to FIG. 16, illustrated therein is the completed electronic device 100 having a user interface in accordance with one embodiment of the invention. From the view of FIG. 16, the area 1601 where the resistive switch layer (206) is configured to sense a key actuation is shown. The electronic device 100 of FIG. 16 employs a thin, flexible plastic as the cover layer (202). As such, the resistive switch layer (206) is configured to sense key actuation only along the keypad region 106. Note that if the cover layer (202) used glass as a material of manufacture, the resistive switch layer (206) may be able to detect only general key actuations. In such an embodiment, internal control circuitry would rely upon the capacitive sensor (203) to determine the location of the user's finger.

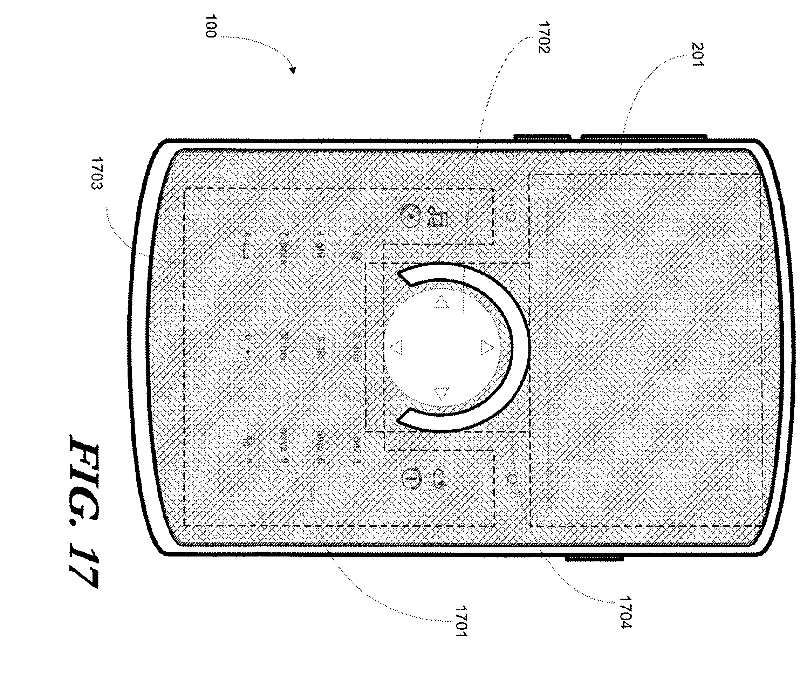

FIG. 17 illustrates the area 1701 in which the capacitive sensor (203) is active, in accordance with one embodiment of the invention. In the embodiment of FIG. 17, the entire front surface 105 of the device 100 is configured to respond to the proximity detection of the capacitive sensor (203). This includes the area underneath the navigation wheel 1702, which may be used as a key for selection of the alternate modes of the device 100. Proximity with each of a display region 201, a keypad region 1703, and a navigation region 1704 may be sensed by the capacitive sensor (203). The keypad region 1703 of FIG. 17 is sometimes referred to as the "low-resolution key area" of the device 100.

By having the area 1701 in which the capacitive sensor (203) is active disposed across the front surface 105 of the device 100, the capacitive sensor may be configured to actuate the optical shutter (204) upon the object coming in close proximity with (or touching) the front surface of the portable electronic device 100. When this occurs control circuitry coupled to each of the capacitive sensor and the optical shutter (204) may be configured to, when the segmented optical shutter device is in the opaque state and the capacitive sensing device detects the object, cause at least one segment or window of the optical shutter (204) to transition to the translucent state.

This transition may be used to indicate a change from a low-power mode, or to present one of a plurality of keypad configurations along the keypad region 1703. As noted above, when the device 100 is in an idle mode, the idle mode of the device 100 may be changed to an active mode upon the capacitive sensor (203) detecting an object within a predetermined distance of the device 100. In one exemplary embodiment, this predetermined distance is less than 5 millimeters.

Now that the structure and operation of an electronic device 100 in accordance with embodiments of the invention have been described, the following figures will turn to the functionality of the device as the various keypad configurations are presented with the various modes of an exemplary multifunction device. Such an exemplary multifunction device includes, in one embodiment, a high-resolution display and a segmented optical shutter device. The segmented optical shutter device is configured to present at least one keypad configuration to a user. The keypad configuration presented corresponds to a particular mode of operation of the device, and includes only those keys needed to operate that particular mode. While the segmented optical shutter device may traverse only the keypad region, in the exemplary embodiment the segmented optical shutter device traverses both the keypad region and the high-resolution display. The segmented optical shutter device is further configured to selectively transition from an opaque state to a translucent state. Specifically, the segmented optical shutter is configured to present at least one of a plurality of keypad configurations to the user along the keypad region by transitioning one or more segments in the keypad region from the opaque state to the translucent state.

While embodiments of the invention may be applied to any of a number of different devices, the exemplary device will include the following modes of operation: a radiotelephone mode, a navigational mode, a gaming mode, a music player mode, a video player mode, a picture display mode, a text capture mode, a picture capture mode, or a video capture mode. It will be clear to those of ordinary skill in the art having the benefit of this disclosure that other modes, subsets of these modes, and alternate combinations of subsets of these modes may be used. The modes are exemplary only.

One benefit of embodiments of the present invention is that multiple input devices and modes may be integrated into a single, compact physical space. The touch sensitive components, including the capacitive sensor (203) and the resistive sense layer (206), combined with a "stealth" lighting feature provided by the segmented optical shutter (204) and the electroluminescent device (205), serve to create a multi-modal input mechanism that may be optimized for case specific tasks in the various modes of the device (100).

By way of example, in one mode, controls to navigate long lists of data, such as the song titles of a music collection, can be illuminated and used. In another mode, the keys necessary to provide telephone dialing or text messaging input can be illuminated and used. More generally, embodiments of the invention may be used to aid users in task completion through the hiding and revealing of alternate keypad configurations, thereby eliminating unnecessary visual information.

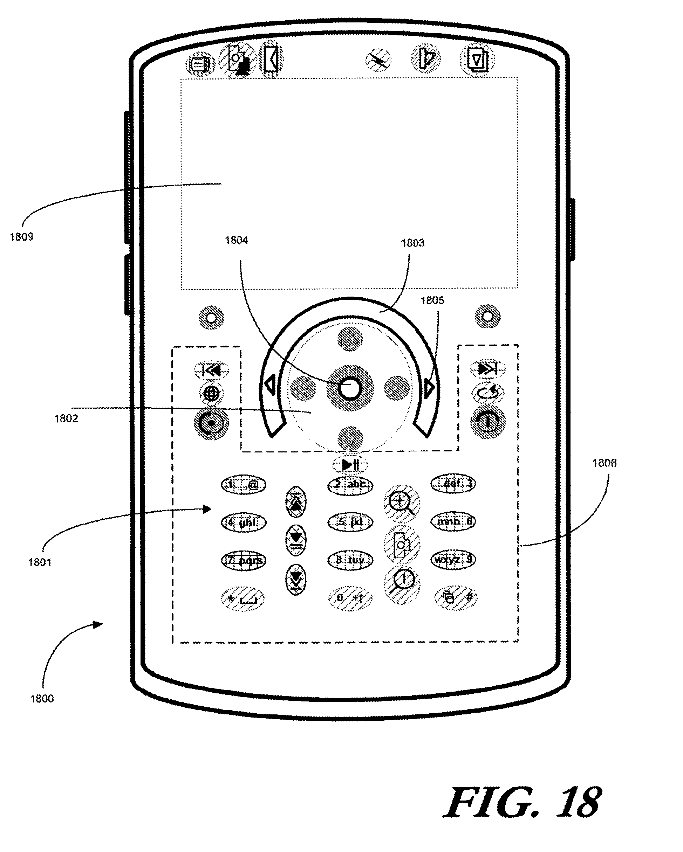

Turning now to FIG. 18, illustrated therein is the exemplary multimodal device 1800 having a plurality of keys 1801 ON, which means that the corresponding shutters are open. In effect, for the exemplary multimodal device 1800, the view of 18 shows all of the keys in the on state. This view illustrates which keys are available. Subsets of these keys will be used in the figures and modes that follow. Each of the keys is geometrically structured as an alphanumeric or device key symbol for the exemplary multimodal device 1800.

The high-resolution display 1809 and the keypad region 1806 are interrupted, in the exemplary embodiment, by a navigation device 1802. In the embodiment of FIG. 18, the navigation device 1802 comprises at least a scroll wheel 1803 or equivalent device and at least a select key 1804. As mentioned above, the cover layer (202) may be smooth and glossy. In some applications, it may be desirable to provide a tactile indication of the navigation device 1802 to the user. This is useful because the navigation device 1802 may be a heavily used control, operable in multiple modes. This tactile guide may be accomplished by depositing additional layers of material, be it glass or plastic, atop the cover layer (202). This additional layer, deposited in the shape of the navigation device 1802, provides raised "feelable" indicia of the navigation device 1802 to the user by providing tactile guidance for the user's finger when using navigation device 1802.

The navigation device 1802 may be used in a variety of ways. Further, the navigation device 1802 may take on many shapes and forms. For example, the navigation device 1802 may include at least one directional arrow 1805. These arrows may be disposed along a navigation wheel. Four or more arrows may be included to provide multi-direction navigation capability. The navigation device 1802 may be used to select between operational modes, such as by permitting a selection between a portrait mode (with respect to the orientation of the high resolution display) and a landscape mode. Note that while the exemplary device discussed herein has a high resolution display that appears wider than it is tall when the device is in a vertical position, the term "portrait" shall be used to refer to the orientation of the high resolution display when the device is viewed vertically, i.e. taller than wide, and the term "landscape" shall be used to refer to the orientation of the high resolution display when the device is viewed horizontally.

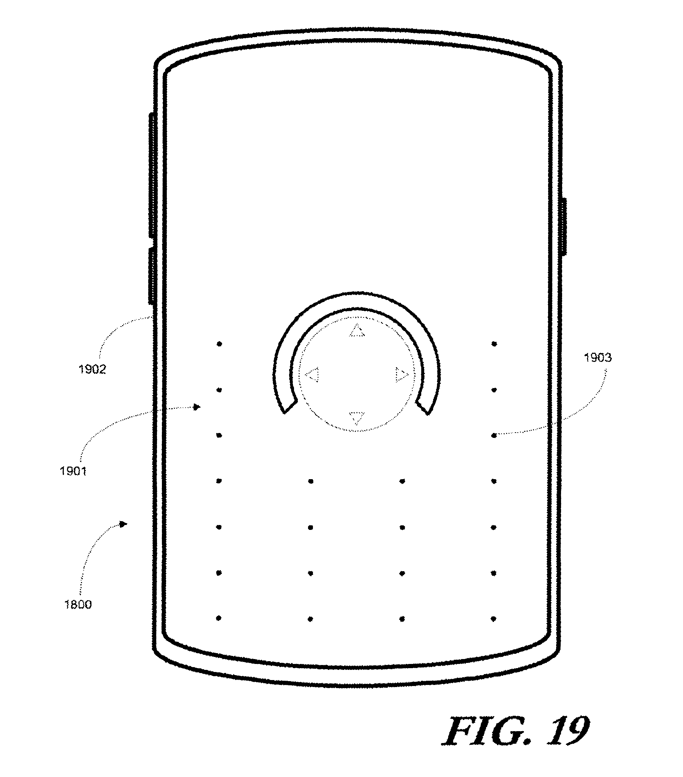

Turning now to FIG. 19, illustrated therein is the exemplary multimodal device 1800 when in the OFF mode. The view of FIG. 19 may also arise when the exemplary multimodal device 1800 is in a low power or sleep mode. When the optical shutter (204) covers both the keypad region and the display, the interface surface 1901 of the exemplary multimodal device 1800 will be blank when the device is in this state. This occurs because each of the shutters is closed (i.e. in the opaque state), thereby prohibiting visibility of any of the keys or the high-resolution display. Thus the low-resolution key area is blank, as is the high-resolution display area. In one embodiment, the exemplary multimodal device 1800 comprises a housing 1902 having a color. The color of the housing 1902 is chosen to be complimentary or substantially similar to the color of the interface surface 1901 when the shutters are closed, so that the device in the OFF or low-power mode is smooth, uniform, and of a single or complimentary colors.

As the device in the off mode or low-power mode may have an interface surface 1901 that is completely blank, in one embodiment it is helpful to include indicia of the keypad region so that the user knows approximately where the different keypad configurations corresponding to different operational modes of the mobile device will appear across the interface surface 1901. In the exemplary multimodal device 1800, these indicia are provided by small surface demarcations 1903 that appear across the substantially planar surface of the interface surface 1901. The surface demarcations 1903, which may be applied by printing non-conductive ink on the cover layer (202), may be arranged in columns and rows as shown in FIG. 19. Specifically, in one embodiment, the surface demarcations 1903 are arranged in three columns and four rows. When low resolution display optical shutter (204) creates a particular set of user actuation targets by transitioning one or more shutters to the open state by selective actuation of the low resolution display, the various key indicators are dynamically presented between the surface demarcations 1903.

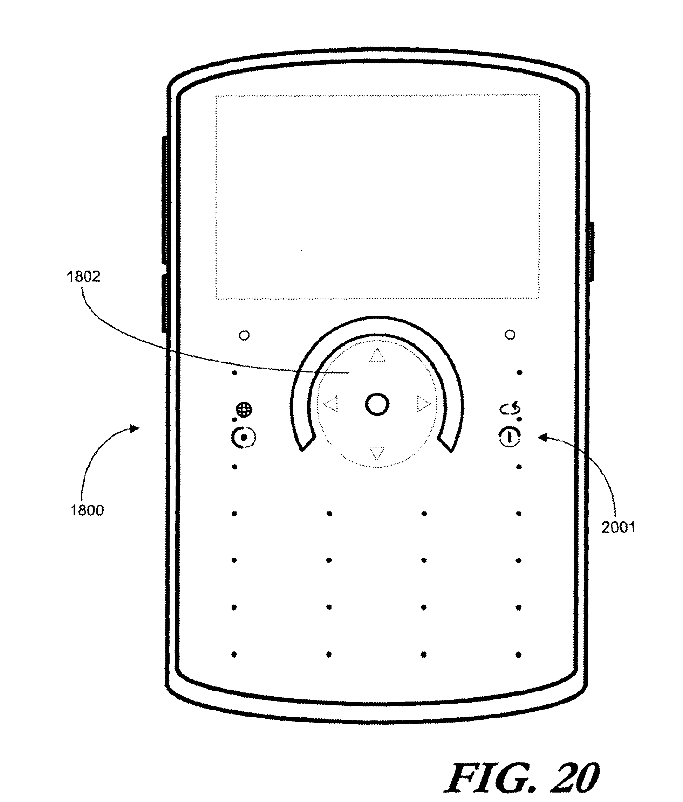

Turning now to FIG. 20, illustrated therein is the exemplary multimodal device 1800 having changed from the OFF or low power mode of FIG. 19 to a navigation mode. The exemplary multimodal device 1800 may be converted from the OFF or low power mode to an alternate mode in one of a variety of ways. A first method, as noted above, is for a user to actuate the proximity sensor. A second method, discussed in more detail below, is from an external event. When transitioning from the OFF or low power mode, the exemplary multimodal device 1800 awakens at least one display segment of the segmented optical shutter device transitions to the translucent state. This occurs when the exemplary multimodal device is ON. One keypad configuration and the high-resolution display become visible to the user.

In the navigation mode of FIG. 20, the exemplary multimodal device 1800 presents the navigation keypad configuration 2001. In the navigation mode, a user may use the device, perhaps with the assistance of the global positioning system, to determine a present location and to obtain directions to another location. The keypad configuration 2001 associated with the navigation mode is limited to only the buttons needed for this particular mode. The navigation device 1802 is present, both for navigation to another mode and for scrolling through the different views associated with the navigation mode.

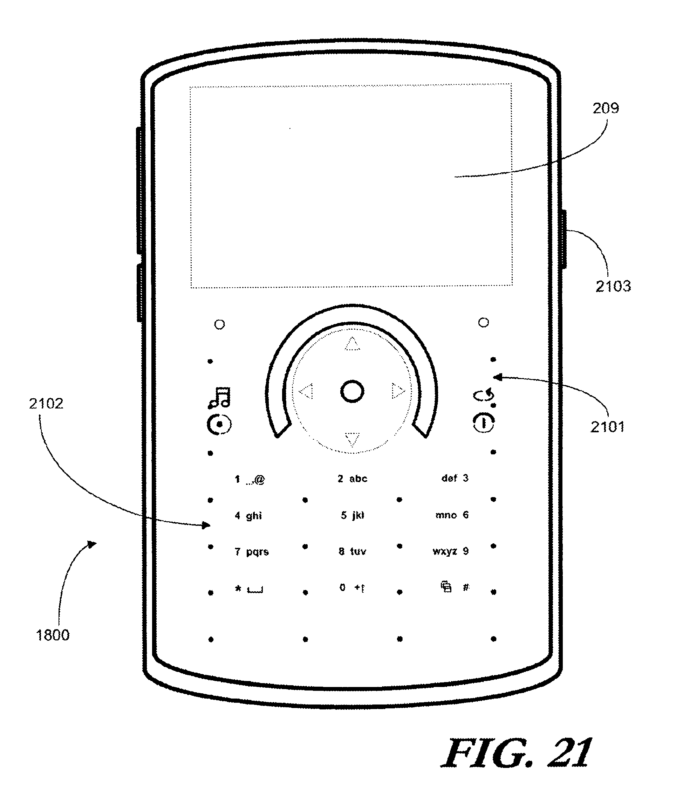

Turning now to FIG. 21, illustrated therein is the telephone mode, or radiotelephone mode where the electronic device is a mobile device. In the telephone mode, used for voice communication, the exemplary multimodal device 1800 has transitioned such that different indicators are dynamically presented along the substantially planar user interface surface 2101 by optical shutters disposed beneath the substantially planar user interface surface 2101. In particular, the exemplary multimodal device 1800 has transitioned such that the shutters, opening in areas other than the display region where the high-resolution display is disposed beneath the substantially planar user interface surface 2101, have presented a traditional telephone keypad 2102. The traditional telephone keypad 2102 includes number keys 1-9 and 0, as well as send and receive keys. The traditional telephone keypad 2102 is presented in a portrait configuration relative to the high-resolution display 209.

The navigation device 1802, interrupting the substantially planar user interface surface 2101, is still accessible. It may be used, among other things, for scrolling through an address book list or navigating to other modes.

One particular feature of note in the telephone mode, taking advantage of the capacitive sensor (203) is a power saving option. When the device is in the telephone, or voice communication, mode, and the exemplary multimodal device 1800 is held to the user's head, the capacitive sensor (203) may detect the presence of the user's face near the substantially planar user interface surface 2101. In such a scenario, upon receiving a signal from control circuitry coupled to the capacitive sensor (203), the high resolution display 209 transitions to a low power mode, which may include shutting down the high resolution display 209. This occurs when the proximity sensor detects an object such as the user's face within a predetermined distance of the high-resolution display 209. This feature reduces overall power consumption, thereby extending the life of the battery within the exemplary multimodal device 1800.

As noted above, the present operating mode of the device can be changed in a variety of ways. This includes touching the device or coming within a predetermined distance of the proximity detector. An alternate method of changing modes stems from an external event. For instance, when the device is in an alternate mode, such as the gaming or picture capture mode, and an incoming call from a remote source is received, the exemplary multimodal device 1800 may automatically transition into the telephone mode so that the user may accept the incoming call. Other external events from remote sources include an incoming text message, an incoming multimedia message, or an incoming data transmission. Each of these events, in one embodiment, may cause the device to transition from one mode to another.

Further, the active mode of the exemplary multimodal device 1800 may be changed by a device event. Such events include the actuation of dedicated buttons 2103 that may be disposed on the sides of the device. Other device events may include a low battery, device error, or low memory warning, each of which may cause the operating mode of the device to transition.

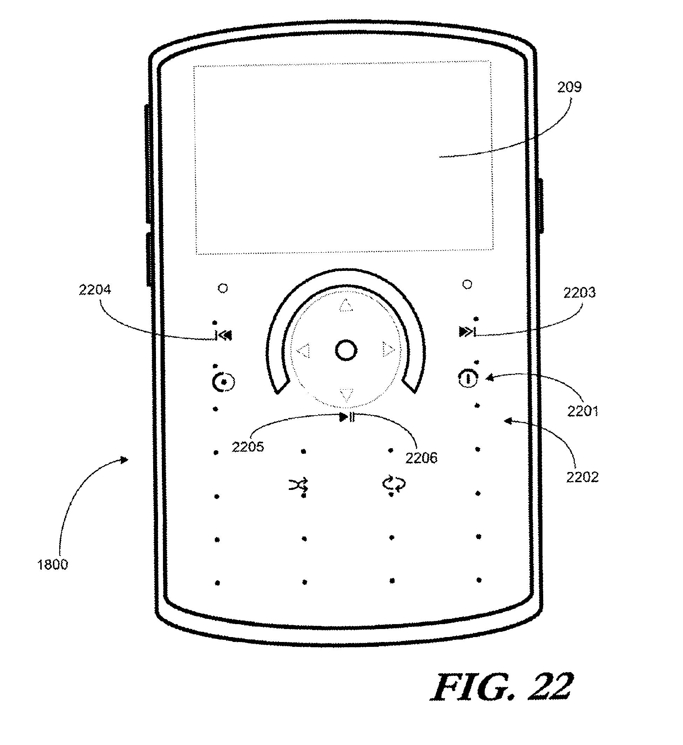

Turning now to FIG. 22, illustrated therein is the exemplary multimodal device 1800 in the music playback mode. In one embodiment of the device, the device is configured to store and playback music or video. In such a mode, the low-resolution optical shutter (204) is configured to present actuation targets 2201 along the user interface 2202 that correspond to the music mode. Such actuation targets 2201 may include at least a fast forward button 2203, a rewind button 2204, a play button 2205 and a pause button 2206.

In one embodiment of the device, these music mode buttons may be presented in multiple orientations relative to the high-resolution display 209. As the dimensions of the high-resolution display may not be square, viewing some images may be more desirable in a landscape mode, where the device is held sideways. To accommodate such situations, in one embodiment the fast forward button 2203, the rewind button 2204, the play button 2205, and the pause button 2206 may be presented in a portrait mode relative to the high-resolution display, i.e. a mode where the device is disposed in the upright position. Alternatively, the fast forward button 2203, the rewind button 2204, the play button 2205 and the pause button 2206 may be presented in a second orientation, the landscape orientation, in an alignment that is transverse to the first orientation, for the landscape mode of the high resolution display 209.

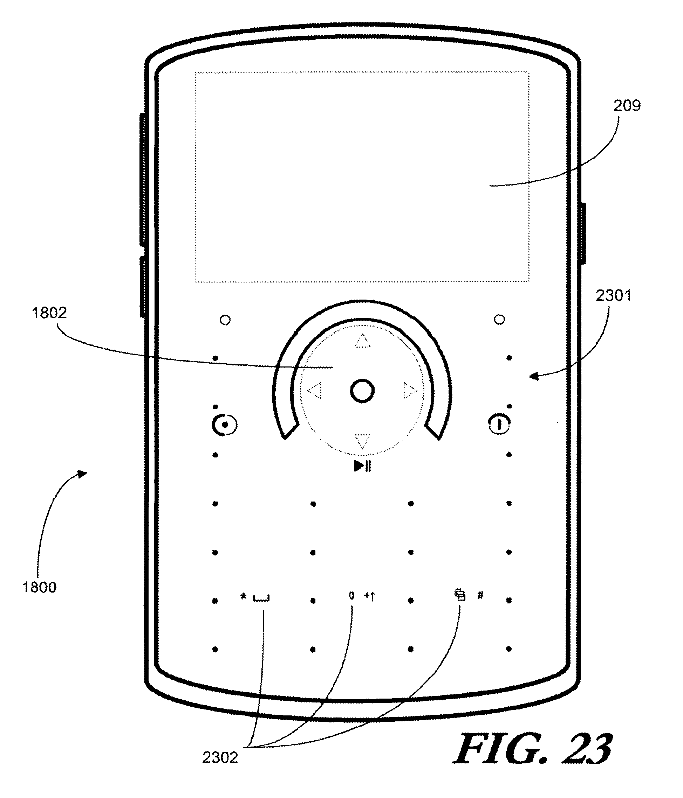

Turning now to FIG. 23, illustrated therein is the exemplary multimodal device 1800 in the gaming mode. In the gaming mode, the keypad configuration 2301 may be presented in a portrait orientation relative to the high-resolution display 209. In the gaming mode, a rudimentary set of keys may be all that's required, including the directional keys associated with the navigation device 1802, and two or three game action keys 2302, which may be disposed at the base of the device.

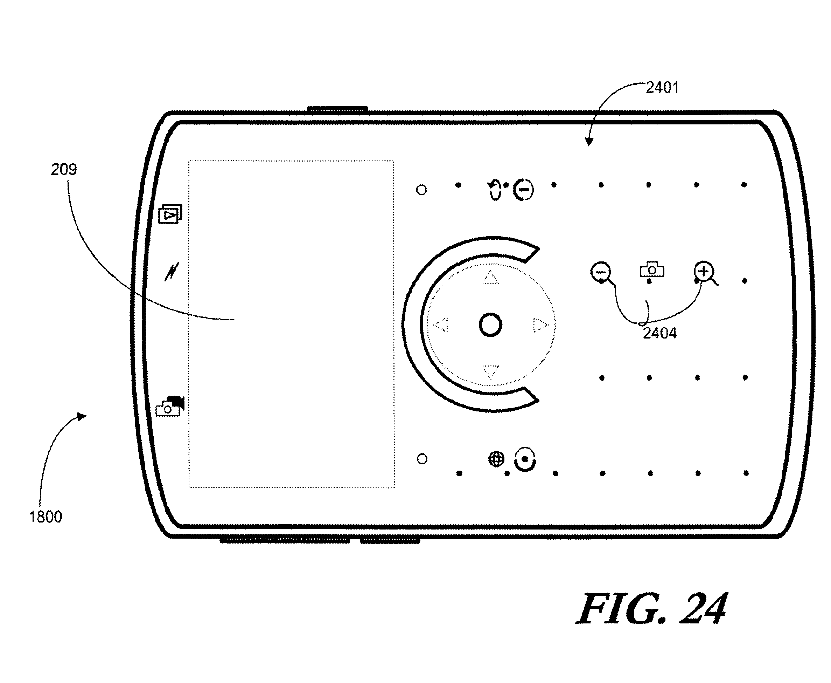

Turning now to FIG. 24, illustrated therein is the exemplary multimodal device 1800 in a photo or video capture mode, also known as a camera mode. In the camera mode, the particular keypad configuration 2401 is presented in a landscape mode relative to the high-resolution display 209. In the landscape orientation, select camera operating keys 2404 are presented in an orientation that is transverse with respect to the keypad configuration orientations of FIGS. 21-23. The camera, which may be positioned on the rear surface of the exemplary multimodal device 1800, takes pictures while the pictures are displayed on the high-resolution display.

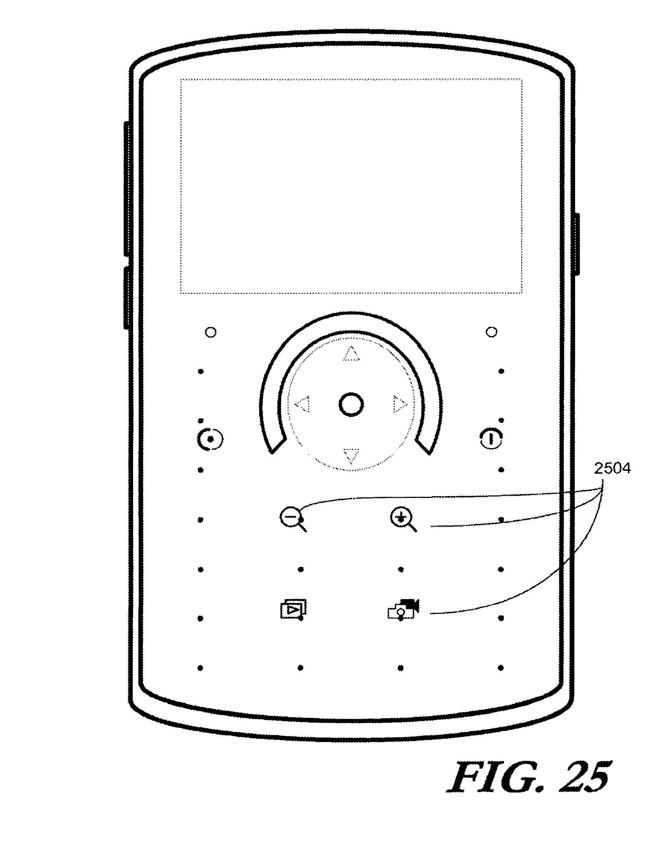

Note that the active mode of the device, or the keypad configuration, may be changed with the physical orientation of the device as well. The device may be configured with an accelerometer that is designed to detect the direction of the force of gravity. Thus, when the device is rotated from a portrait orientation to a landscape orientation, the keypad configuration may accordingly automatically rotate from a portrait orientation to a landscape orientation. Such a rotation may be seen in FIG. 25, as the camera keys 2405 have rotated to a portrait orientation that is transverse with the landscape orientation shown in FIG. 24. As shown, the operational mode of FIG. 25 corresponds to a portrait mode of the device while the operational mode of FIG. 24 corresponds to a landscape mode of the device.

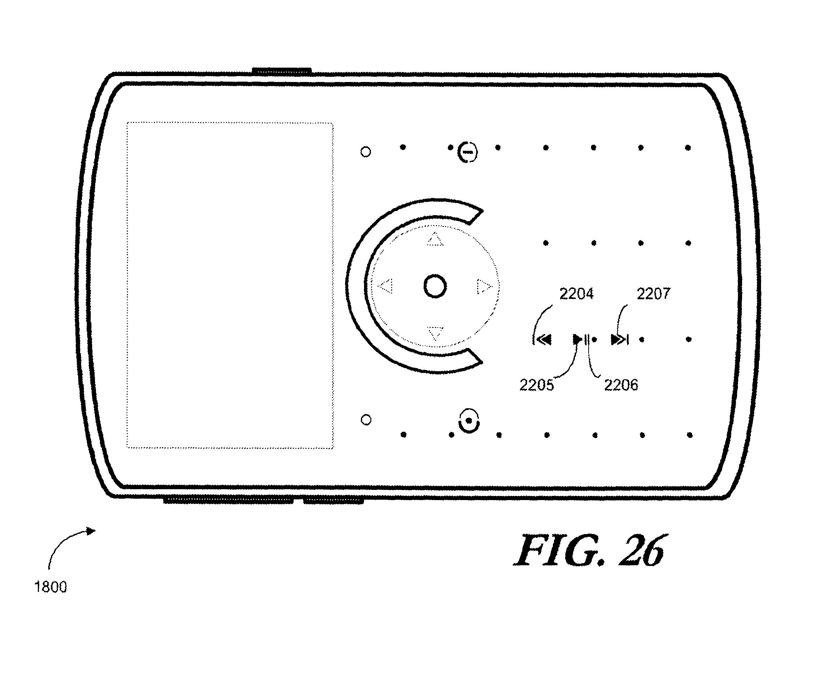

Turning now to FIG. 26, illustrate therein is the music or video playback mode of the exemplary multimodal device 1800 in the landscape mode. Comparing this figure with FIG. 21, it can be seen that the fast forward button 2203, the rewind button 2204, the play button 2205 and the pause button 2206 are now in an orientation that is transverse to that of FIG. 21.

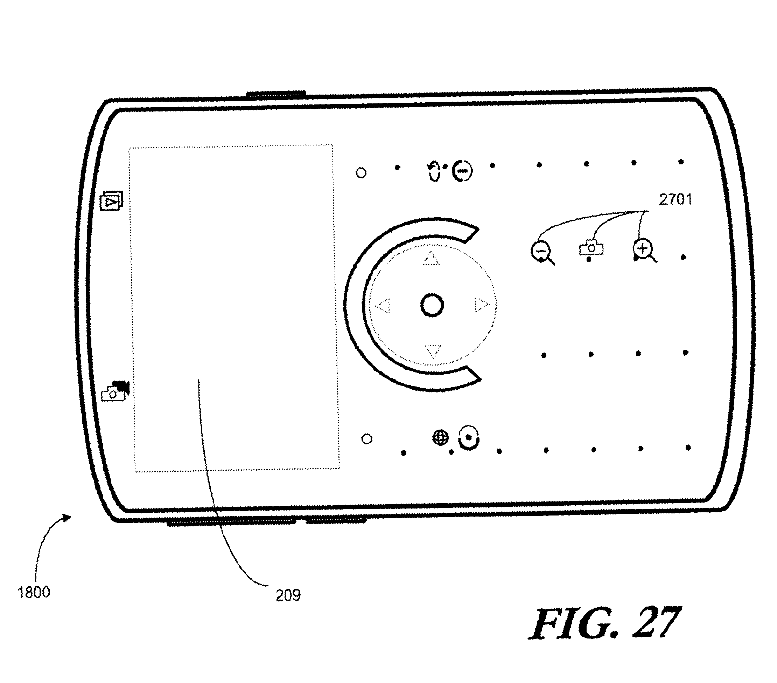

Turning now to FIG. 27, illustrated therein is yet another mode of the exemplary multimodal device 1800. In FIG. 27, which illustrates a video capture mode, the video capture control keys 2701 have been oriented in the landscape mode in accordance with the physical orientation of the device. In such a configuration, the high-resolution display may be used as a viewfinder while the camera (not shown) captures video footage.

As has been shown and described, embodiments of the invention include a portable electronic device having a user interface comprising a high-resolution display and a low-resolution display that is configured to present any of a plurality of keypad configurations associated with a plurality of device operational modes in a keypad region of the user interface. Embodiments of the device include a navigation interface disposed adjacent with the high-resolution display and the low-resolution display. The navigation interface is suitable for navigating among the plurality of operational modes of the device.

When the low-resolution display has segments in the opaque state, light is prohibited from passing through the various shutters or windows. The low-resolution display is configured to transition each of a plurality of segments from an opaque state to a translucent state based on the operational mode of the device. When this occurs, the low-resolution display causes one or more actuation targets, or keys, to appear along the user interface. Each of the device actuation targets corresponds to an active mode of the device, and in one embodiment each device actuation target configuration is limited to only those needed for the active mode of the device. Note that in such an embodiment, where the actuation targets are limited to only those provided, the device may also be configured such that user interaction, including touches of the dynamic keypad are ignored when applied to areas other than those associated with the active mode of the device. Embodiments of the invention enable multiple keypad configurations to be presented within a compact keypad region of the device, thereby increasing ease of use and reducing the cognitive loading of the user.

In the foregoing specification, specific embodiments of the present invention have been described. However, one of ordinary skill in the art appreciates that various modifications and changes can be made without departing from the scope of the present invention as set forth in the claims below. Thus, while preferred embodiments of the invention have been illustrated and described, it is clear that the invention is not so limited. Numerous modifications, changes, variations, substitutions, and equivalents will occur to those skilled in the art without departing from the spirit and scope of the present invention as defined by the following claims. For example Accordingly, the specification and figures are to be regarded in an illustrative rather than a restrictive sense, and all such modifications are intended to be included within the scope of present invention.

## Claims

1. An electronic device, comprising a user interface for receiving a touch input, the user interface comprising a cover layer, a capacitive sensor layer disposed beneath the cover layer, and a segmented optical shutter layer configured to present multiple interface configurations disposed beneath the cover layer.

2. The electronic device of claim 1, further comprising a resistance sensing layer, configured to detect contact with the user interface, disposed beneath the cover layer.

3. The electronic device of claim 2, wherein the resistance sensing layer is disposed beneath the segmented optical shutter layer and the segmented optical shutter layer is disposed beneath the capacitive sensor layer.

4. The electronic device of claim 2, further comprising an electroluminescent device disposed beneath the segmented optical shutter layer.

5. The electronic device of claim 4, wherein the electroluminescent device comprises a segmented electroluminescent cell layer.

6. The electronic device of claim 5, further comprising a circuit substrate assembly electrically coupled to at least one of the capacitive sensor layer, the segmented optical shutter layer, or the resistance sensing layer.

7. The electronic device of claim 6, wherein the circuit substrate assembly comprises control circuitry electrically coupled to the segmented electroluminescent cell layer, wherein the control circuitry is configured to selectively actuate at least one segment of the segmented electroluminescent cell layer, thereby causing the at least one segment to transform from a first state to a second state.

8. The electronic device of claim 7, wherein the first state comprises an opaque state and the second state comprises a translucent state.

9. The electronic device of claim 1, further comprising a circuit substrate assembly electrically coupled to the segmented electroluminescent cell layer, wherein control circuitry coupled to the circuit substrate assembly is configured to selectively actuate at least one cell to transform from a first cell state to a second cell state.

10. The electronic device of claim 9, wherein the second cell state comprises an illuminated state.

11. The electronic device of claim 1, wherein the capacitive sensor layer comprises a plurality of capacitive sensing devices disposed about the display region.

12. The electronic device of claim 1, wherein the segmented optical shutter layer comprises a low-resolution liquid crystal display.

13. The electronic device of claim 12, wherein the low-resolution liquid crystal display comprises a twisted nematic liquid crystal display.

14. The electronic device of claim 1, wherein the segmented optical shutter layer comprises a plurality of segments, each of the plurality of segments corresponding to a key for the electronic device, such that when the each of the plurality of segments is actuated, the key becomes visible to a user.

15. The electronic device of claim 14, wherein the each of the plurality of segments is geometrically configured as a particular key symbol for the electronic device.

16. The electronic device of claim 14, further comprising an electroluminescent cell layer comprising a plurality of electroluminescent cells aligned with the plurality of segments, wherein when the each of the plurality of segments is actuated, a corresponding electroluminescent cell is actuated so as to project light through the each of the plurality of segments.

17. The electronic device of claim 2, further comprising a tactile feedback layer disposed beneath the resistance sensing layer.

18. The electronic device of claim 17, wherein the tactile feedback layer comprises a metal plate having at least one piezo transducer coupled thereto, further comprising a control circuit coupled to each of the resistance sensing layer and the at least one peizo transducer, such that upon the control circuit receiving a key signal from the resistance sensing layer, the control circuit is configured to actuate the at least one piezo transducer.
